(19) Europäisches Patentamt
European Patent Office
Office européen des brevets

(11) **EP 4 614 094 A1**

(12) **EUROPÄISCHE PATENTANMELDUNG**

(43) Veröffentlichungstag:
**10.09.2025 Patentblatt 2025/37**

(21) Anmeldenummer: **25000023.9**

(22) Anmeldetag: **26.02.2025**

(51) Internationale Patentklassifikation (IPC):
**F26B 3/16** (2006.01)  **F26B 17/14** (2006.01)
**F26B 21/12** (2006.01)

(52) Gemeinsame Patentklassifikation (CPC):
**F26B 3/16; F26B 17/14; F26B 21/12**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **01.03.2024 DE 102024000723**

(71) Anmelder: **Motan Holding GmbH**
**78467 Konstanz (DE)**

(72) Erfinder:
• **Gerlach, Mario**
**88299 Leutkirch (DE)**
• **Marka, Moritz**
**88299 Leutkirch (DE)**

(74) Vertreter: **Patentanwälte Jackisch-Kohl und Kohl**
**Stuttgarter Straße 115**
**70469 Stuttgart (DE)**

(54) **VERFAHREN ZUM TROCKNEN VON KUNSTSTOFFMATERIAL SOWIE ANLAGE ZUR DURCHFÜHRUNG DES VERFAHRENS**

(57) Beim Verfahren zum Trocknen von Kunststoffmaterial in Form von Granulat, Pulver und dgl. wird mit wenigstens einem Trockenlufterzeuger (17) Trockenluft erzeugt, die durch in einem Trockentrichter (1) befindliches Kunststoffmaterial geleitet wird. Die Trockenluft nimmt die Feuchtigkeit im Kunststoffmaterial auf und tritt als Rückluft aus dem Trockentrichter (1) aus. Mittels einer Strömungsmessung wird eine Ist-Luftmenge der dem Trockentrichter (1) zugeführten Trockenluft erfasst und auf eine Soll-Luftmenge geregelt. Außerdem wird eine Ist-Gesamtluftmenge der aus dem Trockenlufterzeuger (17) austretenden Trockenluft auf eine Soll-Gesamtluftmenge geregelt. An den Trockenlufterzeuger (17) sind wenigstens zwei Trockentrichter (1) mittels einer Trockenluftleitung (2, 2') und einer Rückluftleitung (3, 3') angeschlossen. In der Trockenluftleitung (2, 2') sitzt eine Strömungsmessblende (8), der eine Stellklappe (7) vorgeschaltet ist, die motorisch verstellbar ist.

Fig. 2

**Beschreibung**

Die Erfindung betrifft ein Verfahren zum Trocknen von Kunststoffmaterial nach dem Oberbegriff des Anspruches 1 sowie eine Anlage zur Durchführung eines solchen Verfahrens nach dem Oberbegriff des Anspruches 12.

Kunststoffmaterial, wie Kunststoffgranulate und dgl., werden vor ihrer Verarbeitung in einer Verarbeitungsmaschine in einem Trockentrichter so weit getrocknet, dass eine problemlose Verarbeitung des Kunststoffmateriales möglich ist. Die zum Trocknen des Kunststoffmaterials eingesetzte Trockenluft wird mittels eines Trockenlufterzeugers erzeugt und den Trockentrichtern zugeführt. Die Trockenluft durchströmt das im Trockentrichter befindliche Kunststoffmaterial in der Regel von unten nach oben, nimmt hierbei im Kunststoffmaterial enthaltene Feuchtigkeit auf und tritt über eine Rückluftleitung als Rückluft aus dem Trockentrichter aus. Häufig sind an einen Trockenlufterzeuger mehrere Trockentrichter angeschlossen, durch die die Rückluft geleitet wird. Beim Einschalten des Trockenlufterzeugers wird die maximale Luftmenge, die er erzeugen kann, als Gesamtluftmenge in die Anlage gebracht. Die Aufteilung der Gesamtluftmenge auf die verschiedenen Trockentrichter erfolgt nach der 100 %-Luftmengenauslegung der Trockentrichter. Die 100 %-Luftmengenauslegung ist dabei so vorgesehen, dass jeder Trockentrichter 100 %-Luftmenge bezogen auf sein Volumen erhält. Ein kleinerer Trockentrichter erhält somit weniger Luftmenge als ein größerer Trockentrichter, der eine größere Luftmenge benötigt. Allerdings ist die jedem einzelnen Trockentrichtern zugewiesene Trockenluftmenge nicht optimal. In der Regel erhalten die einzelnen Trockentrichter mehr Trockenluft, als tatsächlich für den Trockenvorgang benötigt wird. Dadurch tritt eine erhebliche Energieverschwendung auf. Auch besteht die Gefahr der Materialübertrocknung.

Der Erfindung liegt die Aufgabe zugrunde, das gattungsgemäße Verfahren und die gattungsgemäße Anlage so auszubilden, dass der Trockentrichter nur die zum Trocknen erforderliche Menge an Trockenluft erhält.

Diese Aufgabe wird bei dem gattungsgemäßen Verfahren erfindungsgemäß mit den kennzeichnenden Merkmalen des Anspruches 1 und bei der gattungsgemäßen Anlage erfindungsgemäß mit den kennzeichnenden Merkmalen des Anspruches 12 gelöst.

Beim erfindungsgemäßen Verfahren wird mittels der Strömungsmessung eine Ist-Luftmenge derjenigen Trockenluft erfasst, die dem Trockentrichter zugeführt wird. Die Ist-Luftmenge wird auf eine für den jeweiligen Trocknungsfall vorgesehene Soll-Luftmenge geregelt. Auch die Ist-Gesamtluftmenge der aus dem Trockenlufterzeuger austretenden Trockenluft wird auf eine Soll-Gesamtluftmenge geregelt. Dadurch ist sichergestellt, dass der Trockenlufterzeuger nur so viel Trockenluft erzeugt, wie zum Trocknen des Kunststoffmaterials im Trockentrichter erforderlich ist. Durch diese Regelung der Luftmengen im Trockentrichter sowie der erzeugten Trockenluft im Trockenlufterzeuger ist ein energiesparendes Verfahren möglich. Insbesondere wird eine Übertrocknung des im Trockentrichter befindlichen Kunststoffmaterials zuverlässig vermieden.

Die Strömungsmessung wird in vorteilhafter Weise mittels einer Strömungsmessblende in Verbindung mit einer Differenzdruck-Luft-Kennlinie vorgenommen. Die dem Trockentrichter zuzuführende Luftmenge kann optimal auf die Größe des Trockentrichters und/oder das zu trocknende Kunststoffmaterial und/oder den Durchsatz des Trockentrichters angepasst werden. Bevorzugt wird die zugeführte Luftmenge durch das Zusammenspiel aus Regelung, Strömungsmessung und Stellklappe angepasst.

An der Strömungsmessblende wird in vorteilhafter Weise ein Differenzdruck gemessen. Hierfür wird der Druck vor und hinter der Strömungsmessblende erfasst und auf diese Weise der Differenzdruck ermittelt.

Zur Erfassung des Differenzdruckes an der Strömungsmessblende wird in vorteilhafter Weise ein Differenzdruck-Messumformer eingesetzt. Durch die Strömungsmessblende wird ein Gegendruck erzeugt, der in vorteilhafter Weise im Hinblick auf eine Optimierung des Trocknungsprozesses eingestellt werden kann. Hierfür ist in vorteilhafter Weise eine Stellklappe vorgesehen, die je nach den Anforderungen verstellt werden kann, vorzugsweise mit Hilfe eines entsprechenden Motors.

Um die Ist-Luftmenge des Trockentrichters zu ermitteln, mit dem eine optimale Trocknung des Kunststoffmateriales bei geringem Energieaufwand möglich ist, werden verschiedene Kenngrößen herangezogen. Hierfür werden in vorteilhafter Weise der Differenzdruck an einer Strömungsmessblende, die Temperatur der dem Trockentrichter zugeführten Trockenluft, der statische Luftdruck, eine Gaskonstante für die Trockenluft und eine für die Geometrie der Strömungsmessblende hinterlegte Formel herangezogen. Eine Steuerung kann mit diesen Kenngrößen die Ist-Luftmenge des Trockentrichters berechnen. Diese Ist-Luftmenge kann der Volumenstrom oder auch der Massenstrom sein.

Der statische Luftdruck wird an einer Position in einer Rohrleitung des Trockentrichters oder an der Umgebung gemessen. Wahlweise kann der statische Luftdruck auch über die Eingabe der Aufstellungshöhe des Trockentrichters berechnet werden.

Mit der Steuerung kann in vorteilhafter Weise eine Regelung derart vorgenommen werden, dass die Ist-Luftmenge der Soll-Luftmenge entspricht, wobei vorteilhaft zulässige Toleranzen zugelassen werden.

In vorteilhafter Weise werden zur Ermittlung der Ist-Gesamtluftmenge des Trockenlufterzeugers der Differenzdruck an einer Strömungsmessblende, eine für die Geometrie der Strömungsmessblende hinterlegte Formel, die Temperatur der den Trockenlufterzeuger verlassenden Trockenluft, der statische Luftdruck und eine Gaskonstante für die Trockenluft herangezogen. Bezüglich der Formel wird auf DIN EN ISO 5167-2:2023-08 verwiesen. Mit diesen Kenngrößen berechnet eine Steuerung die Ist-Gesamtluftmenge des Trockenerzeugers. Die Strömungsmessblende sitzt in der Trockenluftleitung des Trockenlufterzeugers, über welche die Trockenluft dem Trockentrichter zugeführt wird. Mit der Steuerung lässt sich in einfacher Weise die Ist-Gesamtluftmenge berechnen. Die Steuerung ist in vorteilhafter Weise so ausgelegt, dass sie die Ist-Gesamtluftmenge unter Berücksichtigung zulässiger Toleranzen auf eine Soll-Gesamtluftmenge regelt. Die Regelung ermöglicht es, dem Trockentrichter nur diejenige Menge an Trockenluft zuzuführen, die für die vorgesehene Trocknung des Kunststoffmaterials in diesem Trockentrichter benötigt wird.

Eine zuverlässige Bestimmung der Ist-Einzelluftmenge des Trockentrichters bzw. der Ist-Gesamtluftmenge. des Trockenlufterzeugers ist möglich, wenn der statische Luftdruck als einer der Kenngrößen in einer Rohrleitung des Trockentrichters bzw. der Trockenlufterzeugers oder auch in der Umgebung gemessen wird.

Eine besonders einfache Einstellung der Ist-Gesamtluftmenge des Trockenlufterzeugers ist dann möglich, wenn hierfür die Drehzahl eines Gebläses des Trockenlufterzeugers eingestellt wird. Mit dem Gebläse wird die Trockenluft erzeugt, wobei durch die Gebläsedrehzahl die Menge der dem Trockentrichter zuzuführenden Trockenluft in einfacher Weise und genau eingestellt werden kann.

Als Alternative zur Einstellung der Gebläsedrehzahl oder auch als zusätzliche Möglichkeit ist in vorteilhafter Weise vorgesehen, dass zur Veränderung der Ist-Gesamtluftmenge des Trockenlufterzeugers wenigstens eine Bypassleitung vorgesehen ist, über welche es möglich ist, Luft aus der Rohrleitung des Trockenlufterzeugers abzuführen. In diesem Falle ist eine Drehzahländerung des Gebläses nicht erforderlich. Ist zu viel Trockenluft vorhanden, kann der nicht benötigte Anteil dieser Trockenluft über die Bypassleitung abgeführt werden, so dass der nachfolgende Trockentrichter nur die zum Trockenvorgang benötigte Menge an Trockenluft erhält.

Werden mit dem Trockenlufterzeuger zwei oder mehr Trockentrichter mit Trockenluft versorgt, dann wird in vorteilhafter Weise zunächst die Ist-Gesamtluftmenge des Trockenerzeugers eingestellt. Anschließend werden dann nacheinander die Ist-Luftmengen der nachgeschalteten Trockentrichter eingestellt. Das bedeutet, dass zunächst die Ist-Luftmenge des ersten eingeschalteten, dem Trockenlufterzeuger nachgeschalteten Trockentrichters eingestellt wird. Sobald dies geschehen ist, wird die Ist-Luftmenge des nächsten Trockentrichters eingestellt. Auf diese Weise werden nacheinander alle eingeschalteten Trockentrichter eingestellt.

In besonders vorteilhafter Ausbildung senden die Trockentrichter nach ihrer Einstellung die jeweiligen Ist-Luftmengen an eine Steuereinheit des Trockenlufterzeugers. Er errechnet aus den zugeführten Ist-Luftmengen der einzelnen Trockentrichter die Ist-Gesamtluftmenge. Sie wird mit einer Soll-Gesamtluftmenge verglichen und bei Bedarf so lange geregelt, bis die Ist-Gesamtluftmenge unter Berücksichtigung einer zulässigen Toleranz der Soll-Gesamtluftmenge entspricht.

Bei einer anderen vorteilhaften Verfahrensweise ist es möglich, dass zunächst wiederum die Ist-Gesamtluftmenge des Trockenlufterzeugers eingestellt wird. Anschließend werden durch ein Freigabesignal alle eingeschalteten Trockentrichter zur Einregelung der Ist-Luftmengen freigegeben.

Die erfindungsgemäße Anlage zur Durchführung des Verfahrens zeichnet sich dadurch aus, dass in der Trockenluftleitung des Trockentrichters der Strömungsmessblende eine Stellklappe vorgeschaltet ist, die motorisch verstellt werden kann. Mit der Stellklappe lässt sich einfach und genau der Gegendruck des Trockentrichters so verändern, dass die an der Strömungsmessblende gemessene Ist-Luftmenge der berechneten Soll-Luftmenge entspricht.

Der Strömungsmessblende ist in vorteilhafter Weise ein Differenzdruckmessumformer zugeordnet, der mit einer Steuereinheit signalverbunden ist. Mit dem Messumformer wird der Druck vor und hinter der Strömungsmessblende ermittelt und hieraus der Differenzdruck berechnet und der Steuereinheit zugeführt.

An die Steuereinheit ist in bevorzugter Weise ein Motor der Stellklappe angeschlossen. Sie kann somit sehr einfach verstellt werden, um den Gegendruck des Trockentrichters einzustellen.

An die Steuereinheit sind in vorteilhafter Weise außerdem ein Druckmessaufnehmer und ein Temperatursensor angeschlossen, die den Druck und die Temperatur der Trockenluft in der Trockenluftleitung erfassen.

Bei einer vorteilhaften Ausführungsform weist der Trockenlufterzeuger in seiner Trockenluftleitung eine Strömungsmessblende auf, die einem in seiner Drehzahl einstellbaren Gebläse nachgeschaltet ist.

Die Drehzahl des Gebläses ist vorteilhaft durch einen Frequenzumrichter einstellbar, wodurch die Ist-Gesamtluftmenge des Trockenlufterzeugers einfach eingestellt werden kann.

Der Strömungsmessblende des Trockenlufterzeugers ist vorteilhaft ein Differenzdruck-Messumformer zugeordnet, der mit einer Steuereinheit signalverbunden ist.

Mit dem Messumformer lässt sich der Druck vor und hinter der Strömungsmessblende erfassen und dadurch der Differenzdruck bestimmen. Das Signal des Differenzdruck-Messumformers wird der Steuereinheit zugeführt, damit diese bei ihrer Berechnung den Differenzdruckwert berücksichtigen kann.

Vorteilhaft ist die Signaleinheit des Trockenlufterzeugers mit der Signaleinheit des Trockentrichter signalverbunden. Hat die Anlage mehr als einen Trockentrichter, dann sind diese mehreren Trockentrichter jeweils mit einer Signaleinheit in vorteilhafter Weise versehen, die bevorzugt mit der Signaleinheit des Trockenlufterzeugers signalverbunden sind. Dadurch ist ein einfacher Datenaustausch zwischen den verschiedenen Steuereinheiten möglich.

Bei einer vorteilhaften Ausführungsform sind die Trockenluftleitung und die Rückluftleitung des Trockenlufterzeugers durch wenigstens eine Bypassleitung miteinander verbunden. In ihr sitzt eine motorisch angetriebene Stellklappe, deren Motor an die Steuereinheit des Trockenlufterzeugers angeschlossen ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsformen näher erläutert. Es zeigen

Fig. 1         in schematischer Darstellung einen Trockentrichter einer erfindungsgemäßen Anlage,

Fig. 2         in schematischer Darstellung eine erfindungsgemäße Anlage mit einem Trockenlufterzeuger, dem mehrere Trockentrichter nachgeschaltet sind,

Fig. 3         in vereinfachter Darstellung einen Trockenlufterzeuger der erfindungsgemäßen Anlage,

Fig. 4         in einer Darstellung entsprechend Fig. 3 eine weitere Ausführungsform des Trockenlufterzeugers,

Fig. 5         in einer Darstellung entsprechend Fig. 3 ein weiteres Ausführungsbeispiel eines Trockenlufterzeugers der erfindungsgemäßen Anlage,

Fig. 6         in schematischer Darstellung eine weitere Ausführungsform einer erfindungsgemäßen Anlage,

Fig. 7         eine Gebläsekennlinie,

Fig. 8 bis 12     in schematischer Darstellung weitere Ausführungsformen von erfindungsgemäßen Anlagen.

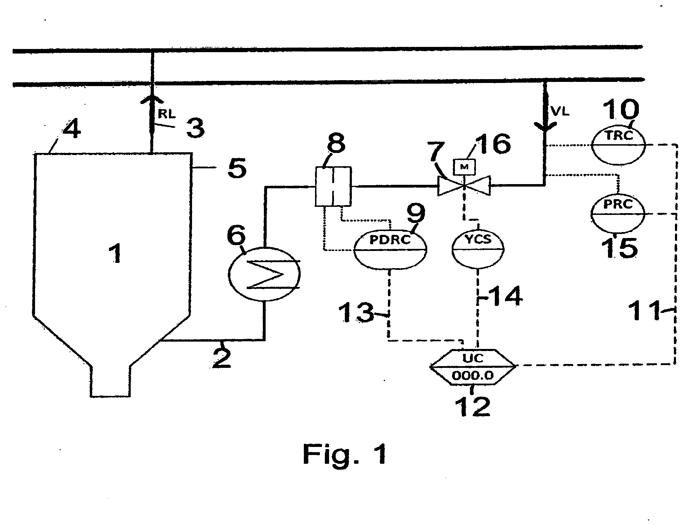

Fig. 1 zeigt einen Trockentrichter 1, in dem sich das zu trocknende Gut, insbesondere Kunststoffteilchen, wie Granulat, Pulver und dgl., befindet. Dieses Gut wird von unten nach oben von Trockenluft durchströmt, die über eine Trockenluftleitung 2 zugeführt wird. Sie mündet in den unteren Bereich des Trockenluftbehälters 1.

Beim Durchgang der Trockenluft durch das Gut nimmt die Trockenluft Feuchtigkeit auf, die als Rückluft über eine Rückluftleitung 3 aus dem Trockentrichter 1 strömt. Die Rückluftleitung 3 ist im Ausführungsbeispiel an die Decke 4 des Trockentrichters 1 angeschlossen. Die Rückluftleitung 3 kann auch im oberen Bereich des Trockentrichters 1 an eine Seitenwand 5 des Trockentrichters 1 angeschlossen sein.

In der Trockenluftleitung 2 sitzt eine Heizung 6, mit der Trockenluft vor dem Eintritt in den Trockentrichter 1 auf die zum Trocknen vorgesehene Temperatur erwärmt werden kann, falls es erforderlich sein sollte.

In der Trockenluftleitung 2 befindet sich eine Stellklappe 7, die vorteilhaft elektromechanisch betrieben wird. Mit der Stellklappe 7 ist es möglich, den Gegendruck im Trockentrichter 1 zu erhöhen oder zu senken. Der Stellklappe 7 nachgeordnet ist eine Strömungsmessblende 8, die mit einem Differenzdruckmessumformer 9 verbunden ist. Mit ihm wird der Differenzdruck über die Strömungsmessblende 8 in bekannter Weise gemessen. Die Stellklappe 7 und die Strömungsmessblende 8 sind in Strömungsrichtung der Trockenluft vor der Heizung 6 angeordnet.

Die Lufttemperatur in der Trockenluftleitung 2 wird mittels eines Sensors 10 in Form eines Temperaturfühlers erfasst. Über eine Steuerleitung 11 werden die Temperatursignale des Sensors 10 einer Steuereinheit 12 zugeführt, der auch die Signale des Messumformers 9 über eine Steuerleitung 13 zugeführt werden.

Der Messumformer 9 erfasst den Druck vor und hinter der Strömungsmessblende 8.

Auch der Motor 16 der Stellklappe 7 ist über eine Steuerleitung 14 an die Steuereinheit 12 angeschlossen.

Die Trockenluft wird im Kreislauf geführt, wobei die Trockenluft vor dem Eintritt in den Trockentrichter 1 bei Bedarf auf die notwenige Trockentemperatur mit Hilfe der Heizung 6 erwärmt wird. Um Energie zu sparen, wird darum die Heizung 6 so geregelt, dass die in den Trockentrichter 1 eintretende Trockenluft nicht zu noch ist, damit das Trockengut nicht geschädigt wird. Der Temperaturfühler 10 misst die Temperatur der Luft, die auf die Strömungsmessblende 8 trifft, um die Luftmenge möglichst exakt vorauszusagen.

Das zur Erzeugung des Luftstromes eingesetzte Gebläse ist in Fig. 1 nicht dargestellt.

Mit einem Druckmessaufnehmer 15 wird der statische Luftdruck in der Trockenluftleitung 2 in Strömungsrichtung vor der Stellklappe 7 erfasst. Die Signale des Druckmessaufnehmers 15 werden der Steuereinheit 12 zugeführt.

Der statische Luftdruck wird an einer Position in der Trockenluftleitung 2 oder an der Umgebung gemessen, wahlweise über die Eingabe der Aufstellungshöhe des Trockentrichters 1 berechnet.

In der Steuereinheit 12 wird die Ist-Einzelluftmenge berechnet, die dem Trockentrichter zur Trocknung des in ihm befindlichen Gutes zugeführt wird. Für diese Berechnung werden der mittels des Differenzdruck-Messumformers 9 ermittelte Differenzdruck an der Strömungsmessblende 8, einer für die Geometrie der Strömungsmessblende 9 hinterlegte Formel, die vom Sensor 10 erfasste Lufttemperatur und der statische Luftdruck, ermittelt durch den Druckmessaufnehmer 15, herangezogen. Die Ist-Einzelluftmenge kann der Volumenstrom in m3/h oder Massenstrom in kg/h sein.

Die Steuereinheit 12 steuert den Motor 16 der Stellklappe 7 so an, dass der Gegendruck so verändert wird, dass die an der Strömungsmessblende 8 gemessene Ist-Einzelluftmenge der berechneten Soll- Einzelluftmenge entspricht, vorteilhaft unter Berücksichtigung zulässiger Toleranzen. Die Soll-Einzelluftmenge wird über die materialspezifische Luftmenge $m^3_{Luft}/kg_{Material}$ und den aktuellen Materialdurchsatz in $kg_{Material}/h$ berechnet.

Mit der Steuereinheit 12 wird somit eine Regelung vorgenommen, die dafür sorgt, dass die Ist-Einzelluftmenge stets der Soll-Einzelluftmenge entspricht.

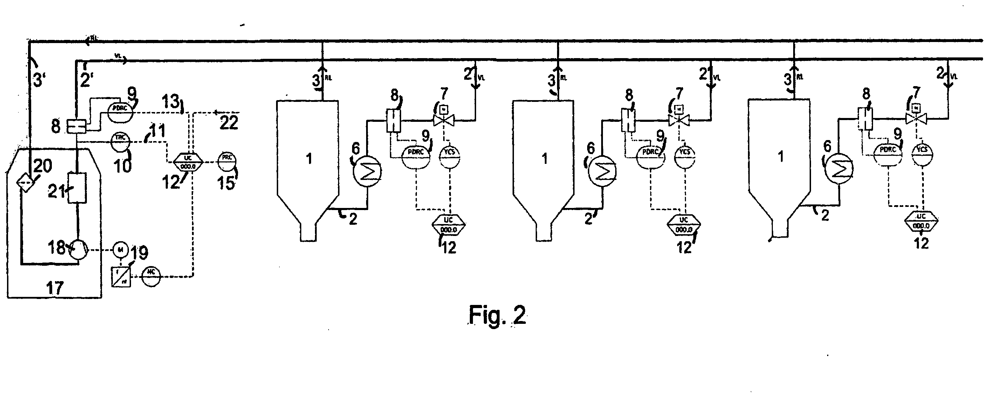

Anhand von Fig. 1 ist die Verfahrensweise am Trockentrichter 1 selbst erläutert worden. Fig. 2 zeigt nun den Fall, dass der Trockentrichter 1 Teil einer Mehrtrichteranlage ist.

Im dargestellten Ausführungsbeispiel sind drei Trockentrichter 1 vorgesehen, die über jeweils eine Rückluftleitung 3 an eine gemeinsame Rückluftleitung 3' eingeschlossen sind. Jeder dieser Trockentrichter 1 ist in der anhand von Fig 1 beschriebenen Weise jeweils mit der Steuereinheit 12 verbunden, mit welcher die Regelung der Einzelluftmenge jedes Trockentrichters 1 geregelt wird. Vereinfacht ausgedrückt, ist der Trockentrichter gemäß Fig. 1 in der Anlage gemäß Fig 2 dreimal vorgesehen.

Die Trockenluftleitungen 2, welche die Trockenluft in der beschriebenen Weise in den jeweiligen Trockentrichter 3 leiten, sind an eine gemeinsame Trockenluftleitung 2' angeschlossen.

Die Trockentrichter 1 sind über die Trockenluftleitung 2' und die Rückluftleitung 3' an einem Trockenlufterzeuger 17 angeschlossen. Er weist ein Gebläse 18 auf, das mittels eines Antriebes 19 angetrieben wird.

Er ist an eine Steuereinheit 12 angeschlossen, mit der über den Antrieb 19 das Gebläse 18 in erforderlichem Maße betätigt wird.

Die über die Rückluftleitung 3' in den Trockenlufterzeuger 17 geleitete Rückluft wird durch wenigstens einen Filter 20 innerhalb des Trockenlufterzeugers 17 geleitet und hierbei von Schmutzteilchen und dgl. gereinigt.

An die Druckseite des Gebläses 18 ist die Trockenluftleitung 2' angeschlossen, in welcher innerhalb des Trockenlufterzeugers 17 wenigstens eine Trockenmittelpatrone 21 angeordnet ist, mit der Feuchtigkeit aus der Luft adsorbiert wird.

Außerhalb des Trockenlufterzeugers 17 sitzt in der Trockenluftleitung 2' eine Strömungsmessblende 8, an der mit dem Differenzdruck-Messumformer 9 in der beschriebenen Weise der Differenzdruck erfasst wird. Die Signale des Differenzdruck-Messumformers 9 werden über die Steuerleitung 13 der Steuereinheit 12 zugeleitet.

Die Lufttemperatur in der Trockenluftleitung 2' wird mittels des Sensors 10 erfasst, der über die Steuerleitung 11 an die Steuereinheit 12 angeschlossen ist.

Vorteilhaft ist der Sensor 10 zur Erfassung der Lufttemperatur im Bereich zwischen dem Trockenlufterzeuger 17 und der Strömungsmessblende 8 an die Trockenluftleitung 2' angeschlossen. Der Temperatursensor 10 und die Strömungsmessblende 8 können aber auch innerhalb des Trockenlufterzeugers 17 positioniert sein. Der Sensor 10 sendet die Temperatursignale in der beschriebenen Weise über die Steuerleitung 11 an die Steuereinheit 12.

Der statische Luftdruck wird mittels des Druckmessaufnehmers 15 erfasst, der in der beschriebenen Weise an die Steuereinheit 12 angeschlossen ist.

Bei der Anlage werden die Lufttemperatur und der statische Luftdruck zentral in der Trockenluftleitung 2' des Trockenlufterzeugers 17 gemessen.

Die Trockentrichter 1 haben in der beschriebenen Weise jeweils die Strömungsmessblende 8 mit dem Differenzdruck-Messumformer 9 sowie die motorisch verstellbare Stellklappe 7.

In der jeweiligen Trockenluftleitung 2 der Trockentrichter 1 sitzt außerdem die Heizung 6, mit welcher bei Bedarf die Temperatur der Trockenluft ggf. auf die zum Trocknen des im Trockentrichter 1 befindlichen Gutes gebracht werden kann.

Im Unterschied zur Darstellung nach Fig. 1 erfolgt die Erfassung der Lufttemperatur und des statischen Luftdruckes nicht mehr am jeweiligen Trockentrichter 1, sondern zentral in der Trockenluftleitung 2'.

Da die Trockentrichter 1 mit Abstand zum Trockenlufterzeuger 17 angeordnet sind, nimmt die Lufttemperatur aufgrund von Wärmeverlusten mit zunehmendem Abstand vom Trockenlufterzeuger 17 ab. Aufgrund der Wärmeverluste berücksichtigen die Steuereinheiten 12 der Trockentrichter 1 je nach Entfernung zum Trockenlufterzeuger 17 eine definierte Temperaturreduzierung.

Weiter ergibt sich aus Fig. 2, dass der Steuereinheit 12 des Trockenlufterzeugers 17 ein Signal 22 zugeführt wird, das die Soll-Gesamtluftmenge kennzeichnet. Die Soll-Gesamtluftmenge setzt sich aus der Soll-Einzelluftmenge der verschiedenen Trockentrichter 1 zusammen.

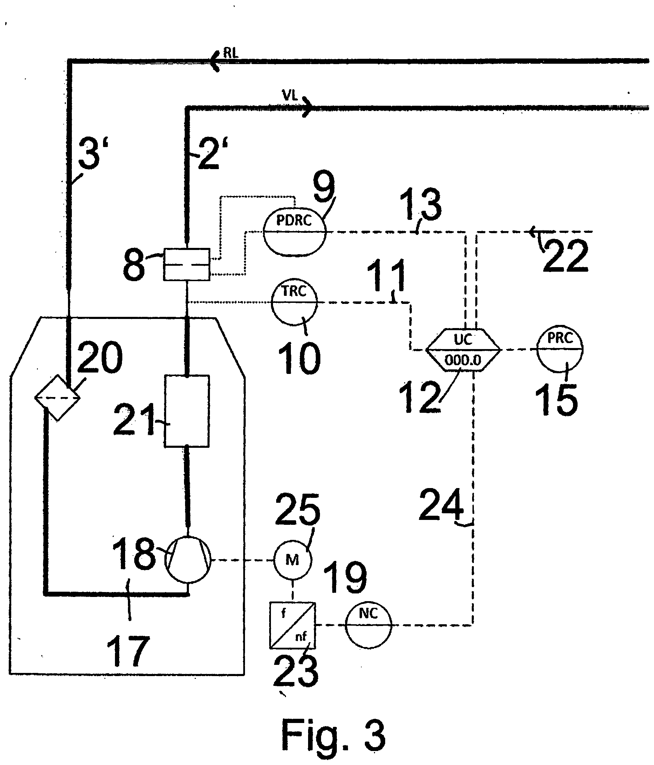

Anhand von Fig. 3 wird die Wirkungsweise des Trockenlufterzeugers 17 beschrieben. Die Steuereinheit 12 berechnet die Ist-Gesamtluftmenge. Hierbei werden der mittels des Differenz-Druckmessumformers 9 an der Strömungsmessblende 8 erfasste Differenzdruck, eine die Geometrie der Strömungsmessblende kennzeichnende und hinterlegte Formel, die mit dem Sensor 10 ermittelte Temperatur der Trockenluft in der Trockenluftleitung 2', der mit Hilfe des Druckmessaufnehmers 15 ermittelte statische Luftdruck sowie eine für die Trockenluft kennzeichnende Gaskonstante berücksichtigt. Wie anhand von Fig. 1 erläutert, kann die Ist-Gesamtluftmenge der Volumenstrom oder Massenstrom sein.

Zur angesprochenen Formel wird auf DIN EN ISO 5167-2:2023-08 verwiesen. Sie definiert, wie der Massen-durchfluss $q_m$ und hieraus unter Berücksichtigung der Luftdichte der Volumenstrom $q_v$ berechnet werden kann.

Der statische Luftdruck wird an einer Position in der Trockenluftleitung 2' des Trockenlufterzeugers 17 oder an der Umgebung gemessen, wahlweise über die Eingabe der Aufstellungshöhe berechnet.

Die Soll-Gesamtluftmenge, die als Signal 22 der Steuereinheit 12 zugeführt wird, kann aus der Summe der Einzelluftmengen, die an den einzelnen Trockentrichtern 1 erfasst worden ist, berechnet werden. Es ist aber auch möglich, die Soll-Gesamtluftmenge per Eingabe an einer Steuereinheit oder dgl. vorzugeben.

Mit der Steuereinheit 12 des Trockenlufterzeugers 17 wird die Gesamtluftmenge der Trockenluft so geregelt, dass die an der Strömungsmessblende 8 gemessene Ist-Gesamtluftmenge genau der eingegebenen bzw. berechneten Soll-Gesamtluftmenge, die als Signal 22 der Steuereinheit 12 zugeführt wird, entspricht.

Die Ist-Gesamtluftmenge kann durch nachfolgend beschriebene drei Funktionen bzw. Vorrichtungen so geregelt werden, dass die an der Strömungsmessblende 8 gemessene Ist-Gesamtluftmenge der eingegebenen bzw. berechneten Soll-Gesamtluftmenge entspricht.

Anhand von Fig. 3 wird eine erste Möglichkeit hierzu beschrieben. Der Antrieb 19 für das Gebläse 18 hat einen Frequenzumrichter 23, mit dem die Drehzahl des Gebläses 18 und damit die Ist-Gesamtluftmenge eingestellt werden kann. Der Frequenzumrichter 23 ist über eine Leitung 24 an die Steuereinheit 12 des Trockenlufterzeugers 17 angeschlossen. Mit der Steuereinheit 12 kann der Frequenzumrichter 23 so eingestellt werden, dass er einen Motor 25 des Gebläses 18 derart antreibt, dass das Gebläse die erforderliche Ist-Gesamtluftmenge erzeugt.

Aufgrund des beschriebenen Regelkreises wird die Ist-Gesamtluftmenge, die aus dem Trockenlufterzeuger 17 in die Trockenluftleitung 2' strömt, stets auf dem erforderlichen Wert gehalten.

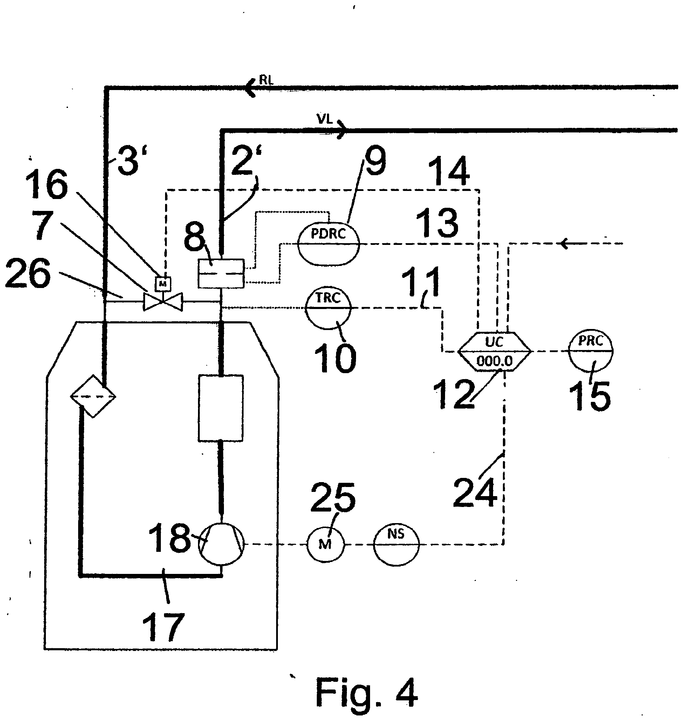

Fig. 4 zeigt eine weitere Möglichkeit, wie die Ist-Gesamtluftmenge, die vom Trockenlufterzeuger 17 erzeugt wird, verändert werden kann. Im Unterschied zur Ausführungsform nach Fig. 3 hat das Gebläse 18 eine feste Drehzahl. Es wird vom Motor 25 drehbar angetrieben, der über die Leitung 24 an die Steuereinheit 12 des Trockenlufterzeugers 17 angeschlossen ist.

In der Trockenluftleitung 2' sitzt außerhalb oder innerhalb des Trockenlufterzeugers 17 die Strömungsmessblende 8, an der mit Hilfe des Differenzdruck-Messumformers 9 der Differenzdruck erfasst werden kann. Außerdem wird entsprechend der vorigen Ausführungsform mit Hilfe des Sensors 10 die Temperatur der Trockenluft in der Trockenluftleitung 2' erfasst und ein entsprechendes Signal an die Steuereinheit 12 über die Leitung 1 gegeben.

An die Steuereinheit 12 ist außerdem der Druckmessaufnehmer 15 angeschlossen.

Die Trockenluftleitung 2' ist über eine Bypassleitung 26 mit der Rückluftleitung 3' verbunden. In der Bypassleitung 26 sitzt die Stellklappe 7, die mittels des Motors 16 betätigt wird. Der Motor 16 ist über die Steuerleitung 14 an die Steuereinheit 12 angeschlossen. Je nach Stellung der Stellklappe 7 kann eine definierte Luftmenge der Trockenluftleitung 2' entnommen werden, wodurch die Ist-Gesamtluftmenge entsprechend verändert werden kann. Die Ansteuerung des Motors 16 für die Stellklappe 7 erfolgt über die Steuerleitung 14 durch die Steuereinheit 12.

Wie anhand der vorigen Ausführungsbeispiele erläutert, berechnet die Steuereinheit 12 anhand der beschriebenen Werte die Ist-Gesamtluftmenge. Über den beschriebenen Regelkreis sorgt die Steuereinheit 12 dafür, dass die Ist-Gesamtluftmenge der vorgegebenen Soll-Gesamtluftmenge entspricht.

Ist die Stellklappe 7 in ihrer Schließstellung, dann wird der Trockenluftzuleitung 2' des Trockenlufterzeugers 17 keine Trockenluft entnommen. Liegt die Ist-Gesamtluftmenge über der Soll-Gesamtluftmenge, steuert die Steuereinheit 12 über die Steuerleitung 14 den Motor 16 so an, dass die Stellklappe 7 so weit verstellt wird, dass die Ist-Gesamtluftmenge wieder der Soll-Gesamtluftmenge entspricht. Je nach Stellung der Stellklappe 7 wird dementsprechend eine kleinere oder größere Luftmenge der Trockenluftleitung 2' entnommen und der Rückluftleitung 3' zugeführt.

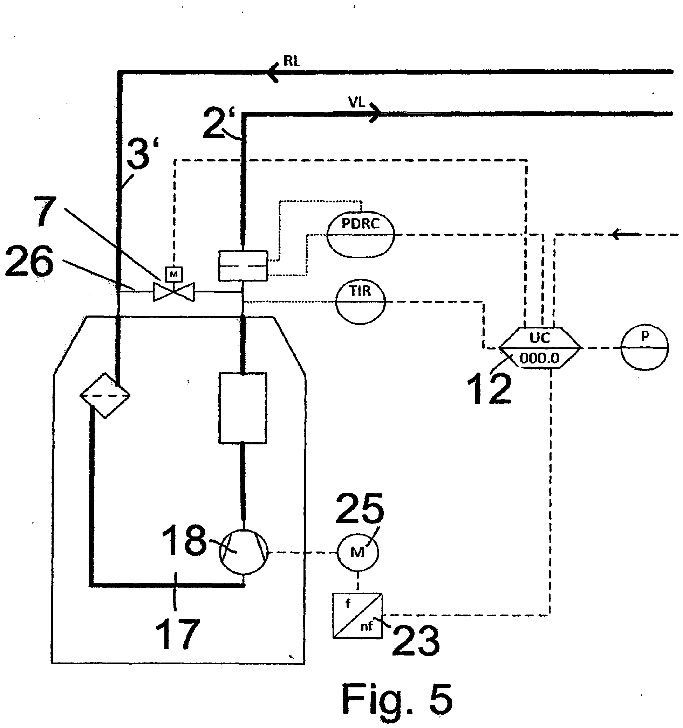

Fig. 5 zeigt eine dritte Möglichkeit, wie die Ist-Gesamtluftmenge verändert werden kann. Der Trockenlufterzeuger 17 hat das Gebläse 18, dessen Motor 25 über den Frequenzumrichter 23 an die Steuereinheit 12 angeschlossen ist, wie anhand von Fig. 3 beschrieben worden ist.

Außerdem ist zwischen der Trockenluftleitung 2' und der Rückluftleitung 3' die Bypassleitung 26 mit der Stellklappe 7 vorgesehen.

Die Anordnung gemäß Fig. 5 stellt somit eine Kombination der Anordnungen gemäß den Fig. 3 und 4 dar.

Mit dem Frequenzumrichter 23 lässt sich, gesteuert durch die Steuereinheit 12, die Drehzahl des Gebläses 18 verändern, um so Einfluss auf die Ist-Gesamtluftmenge zu nehmen. Zusätzlich ist es über die Bypassleitung 26 mit der Stellklappe 7 möglich, zusätzlich in Abhängigkeit von der Stellung der Stellklappe 7 eine definierte Luftmenge der Trockenluftleitung 2' zu entnehmen und in die Rückluftleitung 3' zu überführen.

Diese beiden Maßnahmen in Kombination zur Veränderung der Ist-Gesamtluftmenge erlauben es, sehr geringe Trockenluftmengen zu realisieren.

Um den Materialdurchsatz des Trockentrichters 1 zu erfassen, stehen mehrere Möglichkeiten zur Verfügung.

Eine erste Möglichkeit besteht in der Volumenerfassung und der Umrechnung über die Schüttdichte des zu trocknenden Gutes auf den Massedurchsatz. Für den Massedurchsatz werden die Häufigkeit der Förderzyklen und das Gerätevolumen des zuführenden Fördergerätes, bezogen auf das Gerätevolumen des Trockentrichters 1, herangezogen.

Anstelle des zuführenden Fördergerätes kann auch die Häufigkeit der Förderzyklen und der Gerätevolumen aller absaugenden Fördergeräte herangezogen werden.

Eine weitere Möglichkeit besteht darin, im Trockentrichter 1 einen Sensor für eine Maximalfüllung und einen Sensor für eine Minimumfüllung vorzusehen und die Absenkdauer des Schüttgutspiegels im Trockentrichter 1 zu betrachten.

Der Materialdurchsatz des Trockentrichters 1 kann auch über die Masseerfassung unter Verwiegung des Trockentrichters 1 bestimmt werden.

Eine weitere Möglichkeit, den Materialdurchsatz des Trockentrichters 1 zu erfassen, besteht darin, Informationen an anderen Geräten innerhalb der Anlage auszuwerten. So können beispielsweise Informationen von verwogenen, zuführenden Fördergeräten oder von allen verwogenen absaugenden Fördergeräten verwendet werden. Auch können Informationen von allen absaugenden Verarbeitungsmaschinen, wie z.B. Spritzgussmaschinen, herangezogen und zur Berechnung des Durchsatzes eingesetzt werden.

Diese Möglichkeiten, den Materialdurchsatz des Trockentrichters 1 zu erfassen, sind bekannt und werden darum auch nicht im Einzelnen beschrieben.

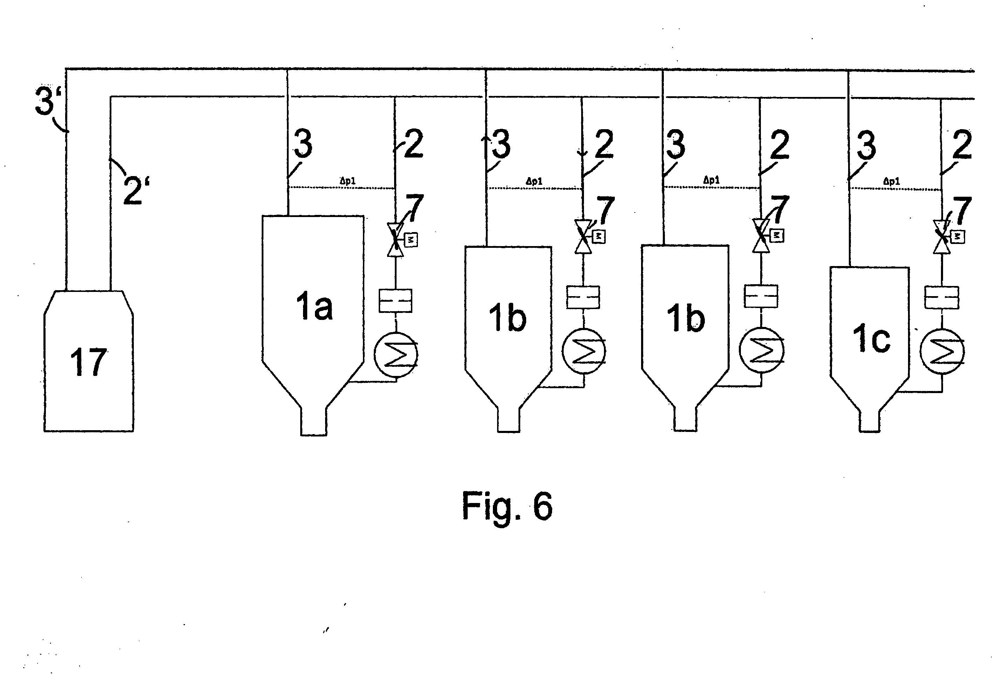

Anhand von Fig. 6 wird beispielhaft die Auslegung der Trockentrichter 1 innerhalb einer Anlage mit mehreren unterschiedlich großen Trockentrichtern beispielhaft erläutert.

Die Anlage hat den Trockenlufterzeuger 17, mit dem die Trockenluft zur Trocknung des in den Trockentrichtern 1a bis 1c befindlichen Gutes erzeugt wird. Die Trockenluft wird vom Trockenlufterzeuger 17 über die gemeinsame Trockenluftleitung 2' zugeführt, welche über die Trockenluftleitungen 2 den einzelnen Trockentrichtern 1a bis 1c zugeführt wird. Die Trockenluft durchströmt das Gut in den Trockentrichtern 1a bis 1c und tritt über die Rückluftleitungen 3 aus den Trockentrichtern aus. Über die gemeinsame Rückluftleitung 3' wird die mit Feuchtigkeit beladene Rückluft dem Trockenlufterzeuger 17 zugeführt, in dem die Rückluft in der beschriebenen Weise gefiltert und aufbereitet wird, bevor sie wieder über die Trockenluftleitungen 2', 2 den Trockentrichtern 1a bis 1c zugeführt wird.

Im dargestellten Ausführungsbeispiel hat der Trockentrichter 1a das größte Gerätevolumen. Die beiden Trockentrichter 1b haben das gleiche Gerätevolumen, das kleiner ist als das Gerätevolumen des Trockentrichters 1a, aber größer ist als das Gerätevolumen des Trockentrichters 1c.

Jedem Trockentrichter 1a bis 1c ist eine Stellklappe 7 zugeordnet, die vorteilhaft elektromechanisch betrieben wird. Bei ausgeschalteter Anlage sind die Stellklappen 7 so eingestellt, dass die Trockenluftleitungen 2 geschlossen sind. Die Stellklappen nehmen in dieser Lage eine 0°-Stellung ein.

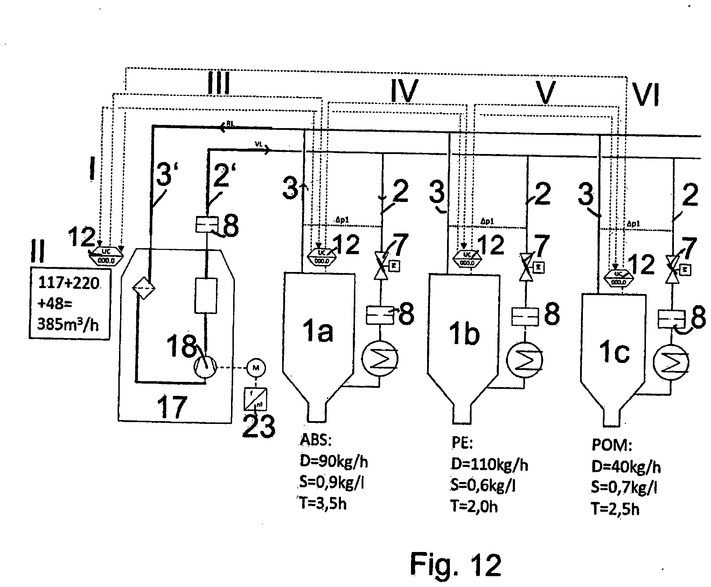

Wird die Anlage eingeschaltet, werden die Stellklappen 7 auf einen definierten Stellwinkel zwischen 0° und 90° eingestellt. Dadurch wird erreicht, dass jeder Trockentrichter 1a bis 1c innerhalb der Anlage zunächst den gleichen Grunddruckverlust bei der bereits eingangs beschriebenen 100 %-Luftmenge erfährt. Dies wird anhand von Fig. 12 im Einzelnen erläutert werden.

Aufgrund der entsprechend eingestellten Stellklappe 7 ergibt sich eine Druckdifferenz $\Delta p1$ zwischen der Trockenluftleitung 2 und der Rückluftleitung 3.

Es ist grundsätzlich auch möglich, beim Einschalten der Anlage die Stellklappe 7 vollständig zu öffnen, was einem Stellwinkel von 90° entspricht.

Wenn, wie im Ausführungsbeispiel, die Trockentrichter 1a bis 1c unterschiedliche Geometrien je nach Baugröße aufweisen, unterscheiden sich die Eigendruckverluste. Dann sind für die Stellklappen 7 der unterschiedlich großen Trockentrichter 1a bis 1c unterschiedliche Ausgangstellwinkel vorgesehen. Diese unterschiedlichen Stellwinkel sind in Fig. 6 durch eine dicke Linie angegeben.

Danach hat der Trockentrichter 1a mit der größten Baugröße den größten Stellwinkel. Bei den Trockentrichtern 1ab der kleineren Baugröße ist der Stellwinkel der Stellklappe 7 geringer.

Durch die definierten Stellwinkel der Stellklappen 7 wird in vorteilhafter Weise die Einregelzeit des jeweiligen Trockentrichters 1a bis 1c optimiert. Bei ausgeschalteter Anlage ist das Gebläse 18 (siehe z. B. Fig. 4) des Trockenlufterzeugers 17 ausgeschaltet, so dass seine Drehzahl Null ist. Beim Einschalten der Anlage regelt die zugehörige Steuereinheit 12 (siehe z. B. Fig. 4) des Trockenlufterzeugers 17 das Gebläse 18 von der Drehzahl Null aus auf die vorgegebene Soll-Gesamtluftmenge bzw. die Soll-Drehzahl des Gebläses 18. Je nach Ausbildung des Trockenlufterzeugers 17 wird durch die Steuereinheit 12 der Gebläsemotor 25 (siehe z. B. Fig. 4) unmittelbar oder über den Frequenzumrichter 23 (siehe z. B. Fig. 4) eingestellt. Alternativ kann die Drehzahl des Gebläses 18 (siehe z. B. Fig. 4) auch mittels einer definierten Gebläsekennlinie, eines gegebenen Druckverlustes und einer gegebenen Soll-Gesamtluftmenge berechnet werden, woraus sich für das Gebläse 18 (siehe z. B. Fig. 4) eine Ausgangsdrehzahl ergibt, die eingestellt wird.

Die mittels der Gebläsekennlinie berechnete Ausgangsdrehzahl des Gebläses 18 (siehe z. B. Fig. 4) dient dazu, die Einregelzeit des Trockenlufterzeugers 17 zu optimieren.

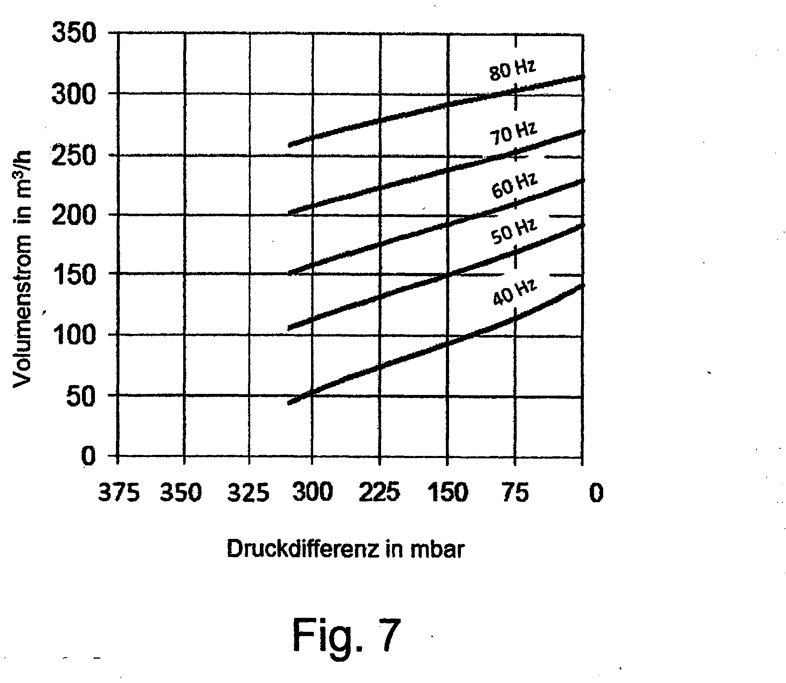

Fig. 7 zeigt beispielhaft Gebläsekennlinien Die Kennlinien zeigen, dass mit zunehmender Gesamtdruckdifferenz der Ansaug-Volumenstrom, gemessen in m³/h, abfällt. Dies gilt unabhängig davon, bei welchen Frequenzen der Gebläsemotor 25 (siehe z. B. Fig. 4) betrieben wird.

Wird beispielhaft ein Gesamtdruckverlust von 75 mbar und weiter eine Soll-Gesamtluftmenge von ca. 120 m³/h angenommen, dann stellt sich gemäß dem Kennliniendiagramm nach Fig. 7 eine Drehzahl des Gebläses 18 von 40 Hz ein. Anhand der Gebläsekennlinie lässt sich somit die Ausgangsdrehzahl des Gebläses 18 einfach einstellen.

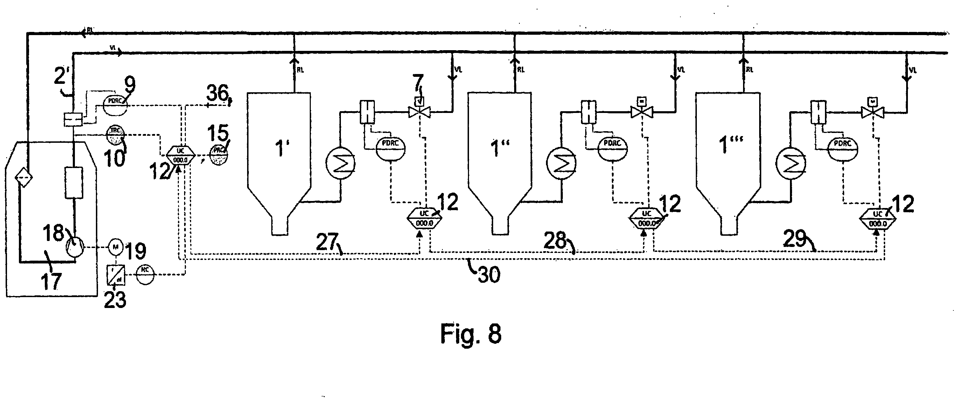

Anhand der Fig. 8 bis 10 werden beispielhaft drei Möglichkeiten beschrieben, wie ein Einregelverfahren der Ist-Einzelluftmenge und der Ist-Gesamtluftmenge innerhalb der Anlage durchgeführt werden kann.

Anhand von Fig. 8 wird ein ablaufgesteuertes Einregeln der Anlage erläutert. Voraussetzung für eine solche Verfahrensführung ist, dass mindestens ein Trockenlufterzeuger 17 und ein Trockentrichter 1 eingeschaltet sind. Die dargestellte Anlage hat beispielhaft einen einzigen Trockenlufterzeuger 10 und drei Trockentrichter 1, die jeweils gleiche Baugröße haben.

Die Trockentrichter 1 haben eine Ausbildung, die im Wesentlichen der Ausführung gemäß Fig. 1 entspricht. Der Unterschied besteht lediglich darin, dass der Sensor zur statischen Druckmessung 15 und der Sensor 10 zur Erfassung der Lufttemperatur der gemeinsamen Trockenluftleitung 2' zugeordnet sind, wie dies beim Ausführungsbeispiel gemäß Fig. 2 der Fall ist.

Das Gebläse 18 des Trockenlufterzeugers 17 wird durch den Antrieb 19 angetrieben, der den Frequenzumrichter 23 aufweist, wie anhand von Fig. 2 im Einzelnen beschrieben worden ist.

Der Trockenlufterzeuger 17 regelt als erstes Gerät der Anlage die Ist-Gesamtluftmenge.

Sobald die Ist-Gesamtluftmenge der Soll-Gesamtluftmenge entspricht, wird die Freigabe zur Einregelung der Ist-Einzelluftmenge für den ersten eingeschalteten Trockentrichter 1 der Anlage erteilt. Im Ausführungsbeispiel ist angenommen, dass der erste eingeschaltete Trockentrichter 1 der dem Trockenlufterzeuger 17 folgende Trockentrichter 1' ist. Die Einregelung der Ist-Einzelluftmenge auf die Soll-Einzelluftmenge erfolgt bei diesem ersten Trockentrichter 1' mit Hilfe der Steuereinheit 12 in der beschriebenen Weise.

Ist die Einregelung des Trockentrichters 1' abgeschlossen, erfolgt die Freigabe zur Einregelung des nachfolgenden eingeschalteten Trockentrichters 1". Die zugehörige Steuereinheit 12 sorgt dafür, dass die Ist-Einzelluftmenge dieses Trockentrichters 1" der Soll-Einzelluftmenge entspricht.

Ist die Einregelung erfolgt, dann wird eine Freigabe zur Einregelung des nächsten eingeschalteten Trockentrichters 1‴ erteilt, bei dem mit Hilfe der zugehörigen Steuereinheit 12 wiederum die Ist-Einzelluftmenge auf die Soll-Einzelluftmenge in der beschriebenen Weise vorgenommen wird.

Diese Vorgehensweise wiederholt sich bei allen weiteren eingeschalteten Trockentrichtern der Anlage.

Durch die vordefinierten Stellwinkel der Stellklappen 7 (Fig. 6) auf Basis der 100 %-Luftmengenregel lässt sich die Einregelzeit des jeweiligen Trockentrichters 1 optimieren.

Die Steuereinheiten 12 sind derart miteinander verknüpft, dass die Steuereinheiten 12 jeweils entsprechende Schaltsignale übersenden. Die Steuereinheit 12 des Trockenlufterzeugers 17 sendet das Signal 27 an die Steuereinheit 12 des ersten eingeschalteten Trockentrichters 1'. Sobald die Einregelung erfolgt ist, sendet diese Steuereinheit 12 ein Signal 28 an die Steuereinheit 12 des nächsten eingeschalteten Trockentrichters. Diese Steuereinheit 12 ihrerseits schickt nach Beendigung der Einregelung ein Steuersignal 29 an die Steuereinheit 12 des nachfolgenden eingeschalteten Trockentrichters.

Nachdem alle Trockentrichter der Anlage eingeregelt worden sind, sendet die Steuereinheit 12 des letzten eingeregelten Trockentrichters 1‴ ein Einschaltsignal 30 an die Steuereinheit 12 des Trockenlufterzeugers 17. Mit Hilfe dieser Steuereinheit 12 wird erneut die Prüfung der Ist-Gesamtluftmenge beim Trockenlufterzeuger 17 geprüft und gegebenenfalls nachgeregelt.

Über die Signalleitung 36 erhält die Steuereinheit 12 des Trockenlufterzeugers 17 die Soll-Einzelluftmengen der Trockentrichter 1' bis 1‴ von deren Steuereinheiten 12. Es besteht auch die Möglichkeit, die Summe der Soll-Gesamtluftmenge aller Trockentrichter 1' bis 1‴ von Hand einzugeben.

Die beschriebene Verfahrensweise der Anlage wird so lange durchgeführt, bis alle Ist-Einzelluftmengen und die Ist-Gesamtluftmenge unter Berücksichtigung einer zulässigen Toleranz den Soll-Einzelluftmengen und der Soll-Gesamtluftmenge entsprechen.

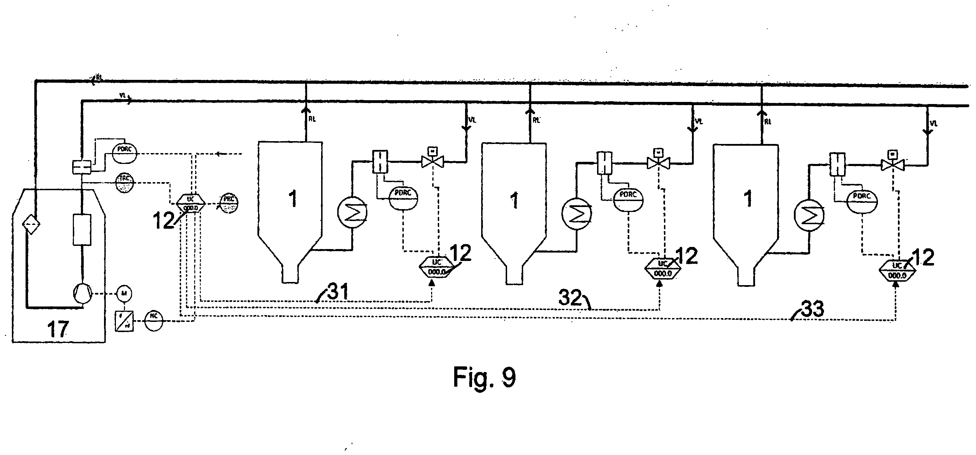

Anhand von Fig. 9 wird eine weitere Möglichkeit der Einregelung des Trockenlufterzeugers 17 und der Trockentrichter 1 erläutert. Bei dieser Verfahrensweise erfolgt ein wechselgesteuertes Einregeln. Voraussetzung hierfür ist, wie beim Verfahren gemäß Fig. 8, dass der Trockenlufterzeuger 17 und die Trockentrichter 1 eingeschaltet sind. Die Einregelung des Trockenlufterzeugers 17 und der Trockentrichter 1 erfolgt in gleicher Weise, wie anhand von Fig. 8 erläutert worden ist.

Alle eingeschalteten Trockentrichter 1 regeln in einem vorgegebenen Zeitintervall die Ist-Einzelluftmenge, sobald diese außerhalb einer zulässigen Toleranz zur jeweiligen Soll-Einzelluftmenge liegt. Nach Ablauf einer definierten Zeit wird die Freigabe zur Einregelung der einzelnen Trockentrichter 1 beendet. Dann prüft die Steuereinheit 12 des Trockenlufterzeugers 17, ob die Ist-Gesamtluftmenge noch der Soll-Gesamtluftmenge entspricht. Ist dies nicht der Fall, dann erfolgt eine Nachregelung derart, dass die Ist-Gesamtluftmenge innerhalb einer zulässigen Toleranz der Soll-Gesamtluftmenge entspricht.

Anschließend werden wieder in bestimmten Zeitintervallen die Ist-Einzelluftmengen der Trockentrichter 1 überprüft und gegebenenfalls mit den zugehörigen Steuereinheiten 12 nachgeregelt. Anschließend erfolgt wieder die Überprüfung und Regelung der Gesamtluftmenge des Trockenlufterzeugers.

Die Steuereinheit 12 des Trockenlufterzeugers 17 steuert im Unterschied zur vorigen Ausführungsform die einzelnen Steuereinheiten 12 der nachgeschalteten Trockentrichter 1 an. Die entsprechenden Schaltsignale 31 bis 33 sind angegeben. Die Steuereinheit 12 des Trockenlufterzeugers 17 kann die Steuereinheiten 12 der Trockentrichter 1 zeitlich nacheinander oder auch gleichzeitig aktivieren.

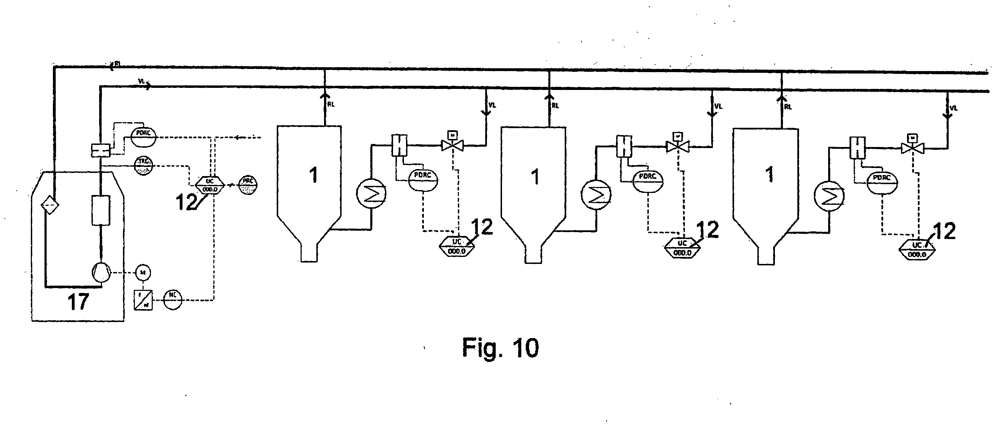

Anhand von Fig. 10 wird eine Verfahrensweise beschrieben, bei der ein freies Einregeln der eingeschalteten Trockentrichter 1 erfolgt. Im Unterschied zu den beiden vorigen Ausführungsformen sind die Steuereinheiten 12 des Trockenlufterzeugers 17 und der Trockentrichter 1 nicht unmittelbar miteinander signalverbunden.

Damit das freie Einregeln erfolgen kann, müssen mindestens der Trockenlufterzeuger 17 und die Trockentrichter 1 eingeschaltet sein.

Die Steuereinheit 12 des Trockenlufterzeugers 17 regelt in bestimmten Zeitintervallen die Ist-Gesamtluftmenge, sobald diese außerhalb einer zulässigen Toleranz zur Soll-Gesamtluftmenge liegt.

Auch die Steuereinheiten 12 der eingeschalteten Trockentrichter 1 regeln in bestimmten Zeitabständen die Ist-Einzelluftmengen, sobald diese außerhalb einer zulässigen Toleranz zu den Soll-Einzelluftmengen liegen. Die Zeitintervalle für die Regelung der Trockentrichter 1 untereinander ist so gewählt, dass stets nur einer der eingeschalteten Trockentrichter 1 geregelt wird.

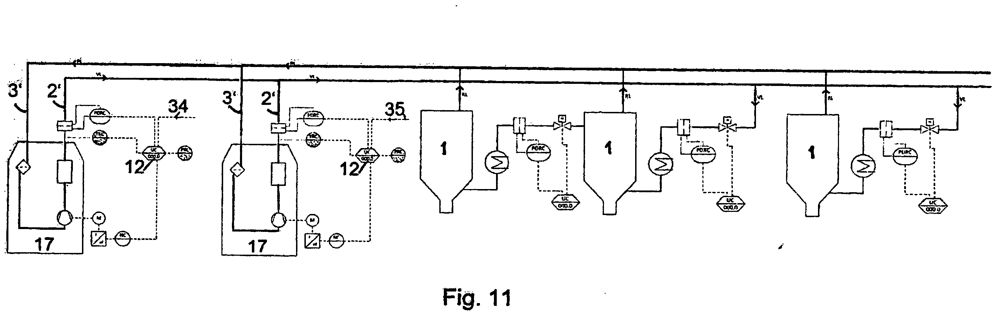

Die anhand der Fig. 8 bis 10 erläuterten verschiedenen Verfahrensmöglichkeiten für die Regelung sind in einer Anlage möglich, die nur einen oder auch mehrere Trockenlufterzeuger 17 enthält. Eine solche Anlage ist beispielhaft in Fig. 11 dargestellt. Bei dieser Anlage sind zwei Trockenlufterzeuger 17 vorgesehen, die gleich ausgebildet und in der beschriebenen Weise an die Rückluftleitung 3' und an die Trockenluftleitung 2' angeschlossen sind. Wie bei den vorigen Ausführungsbeispielen sind zur Regelung der jeweiligen Luftmenge die Steuereinheiten 12 vorgesehen. Entsprechend den Ausführungsbeispielen nach den Fig. 8 bis 10 erhalten die Steuereinheiten 12 der beiden Trockenlufterzeuger 17 jeweils Signale 34, 35, welche die Soll-Gesamtluftmenge der eingeschalteten Trockentrichter 1 kennzeichnen. Die Soll-Gesamtluftmenge wird entweder manuell eingegeben oder die Summe der Einzel-Luftmengen jedes einzelnen Trockentrichters 1 übergeben.

Die Trockentrichter 1 sind untereinander vorteilhaft gleich ausgebildet, vorteilhaft entsprechend den vorigen beschriebenen Ausführungsformen.

Mit den beschriebenen Verfahren wird die Gesamtluftmenge optimal auf den Bedarf der Trockentrichter 1 in der Anlage aufgeteilt. Sie erfolgt in Abhängigkeit von der im jeweiligen Trockentrichter 1 befindlichen Materialart und dem Durchsatz des jeweiligen Trockentrichters. Die über die spezifische Luftmenge theoretisch berechnete Einzelluftmenge dient somit nicht nur zur Erstauslegung, sondern wird an den jeweiligen Trockentrichtern 1 in der beschriebenen Weise mittels der Steuereinheiten 12 eingestellt. Der Trockenlufterzeuger 17 seinerseits ist so ausgebildet, dass er nur diejenige Luftmenge liefert, die tatsächlich in der Anlage für die einzelnen Trockentrichter 1 notwendig ist.

Das beschriebene Verfahren zeichnet sich dadurch aus, dass ein optimaler Wärmeeintrag in die Trockentrichter 1 durch die beschriebene Luftmengenverteilung auf jeden einzelnen Trockentrichter 1 vorgenommen wird. Dadurch lassen sich optimale Trocknungsergebnisse erreichen. Das in den Trockentrichtern 1 befindliche Material wird derart getrocknet, dass die erforderliche Ziel-Restfeuchte im zu trocknenden Gut zuverlässig und innerhalb optimaler Zeit erreicht wird. Das Material wird durch den optimalen Wärmeeintrag geschont. Insbesondere wird eine Übertrocknung vermieden.

Mit den beschriebenen Verfahren lässt sich auch eine hohe Energieeinsparung erzielen, weil die Heizleistung für die Trockenluft optimal eingestellt werden kann.

Auch der Trockenlufterzeuger 17 arbeitet energiesparend, weil die Drehzahl seines Gebläses 18 genau auf die erforderliche Gesamtluftmenge abgestimmt wird.

Da an den einzelnen Trockentrichtern 1 die Temperatur der Trockenluft mittels der Sensoren 10 erfasst wird, tritt im Betrieb der Anlage auch kein oder ein nur allenfalls geringfügiger Anstieg der Rücklufttemperatur auf. Dadurch kann auf Rückkühler in der Anlage verzichtet werden, so dass die Anschaffungskosten für die Anlage gering gehalten werden können.

Bei einem Materialwechsel in den Trockentrichtern 1 und der jeweiligen Eingabe der materialkennzeichnenden Größen in die Steuereinheit 12 wird automatisch die optimale Luftmenge für den jeweiligen Trockentrichter 1 in der beschriebenen Weise ermittelt bzw. eingestellt. Besonders vorteilhaft ist es, wenn sich die Anlage selbst einregelt, d.h. der Trockenlufterzeuger 17 nur die zum Trocknen des Materials in den Trockentrichtern erforderliche Gesamtluftmenge bereitstellt und die Trockentrichter 1 für eine individuelle Trockenluftmenge eingestellt werden.

Die Grunddruckeinstellung der einzelnen Trockentrichter 1 wird über die Stellklappen 7 vorgenommen. Sie werden je nach Trockentrichterbaugröße und Materialinhalt in unterschiedliche Winkelstellungen eingestellt, wie anhand von Fig. 6 beispielhaft beschrieben worden ist. Dadurch ist eine flexible Einstellung bezüglich des Grunddruckverlustes über die entsprechende Winkellage der Stellklappe 7 einfach und dennoch genau möglich. Bisher eingesetzte Blenden für diese Grunddruckverlusteinstellung entfallen, was sich kostenmindernd auf die Anschaffungskosten der Anlage auswirkt.

Die Strömungsmessblenden 8 sind für einen definierten Luftmengenbereich für unterschiedliche Größen der Trockentrichter 1 nicht unterschiedlich ausgebildet.

Bei den beschriebenen Ausführungsbeispielen dienen die verstellbaren Stellklappen 7 an den Trockentrichtern 1 zur Einstellung der Einzelluftmenge, die durch den jeweiligen Trockentrichter 1 strömen soll. Die Strömungsmessblenden 8 der Trockentrichter 1 dienen in der beschriebenen Weise zur Messung der Ist-Einzelluftmenge. Die Ist-Einzelluftmenge kann so mit der optimalen Strömungsmessblende 8 auch durch andere Strömungsmesseinheiten erfasst werden.

Die Strömungsmessblende 8 des Trockenlufterzeugers 17 dient zur Messung der Ist-Gesamtluftmenge. Auch hier kann anstelle der Strömungsmessblende auch eine andere Strömungsmesseinheit eingesetzt werden.

Zur Einstellung der Gesamtluftmenge am Trockenlufterzeuger 17 wird vorteilhaft das Gebläse 18 mit dem Frequenzumrichter 23 herangezogen, mit dessen Hilfe die Gesamtluftmenge über die Drehzahl des Gebläses 18 einfach und genau eingestellt werden kann.

Anstelle des Frequenzumrichters 23 kann auch die Bypassleitung 26 (Fig. 4) herangezogen werden, mit der ebenfalls eine Veränderung der Gesamtluftmenge in einfacher Weise möglich ist.

Anhand von Fig. 12 wird eine beispielhafte Erläuterung mit Zahlenwerten gegeben. Eine Beschränkung auf die angegebenen Materialien und Zahlenwerte sowie die beispielhaft beschriebene Anlage ist hiermit allerdings nicht beabsichtigt.

Die beispielhafte Anlage hat den Trockenlufterzeuger 17, der mit der gemeinsamen Trockenluftleitung 2' und der gemeinsamen Rückluftleitung 3' versehen ist. Die Trockentrichter 1a bis 1c sind mit ihren entsprechenden Trockenluftleitungen 2 bzw. Rückluftleitungen 3 an die Trockenluftleitung 2' und an die Rückluftleitung 3' angeschlossen. In der Trockenluftleitung 2 jedes Trockentrichters 1a bis 1c sitzt jeweils eine Stellklappe 7 sowie eine Strömungsmesseinrichtung 8.

Der Trockenlufterzeuger 17 hat das Gebläse 18 mit dem Frequenzumrichter 23. Mit dem Frequenzumrichter 23 lässt sich in der beschriebenen Weise die Drehzahl des Gebläses einstellen.

Der Trockentrichter 1a enthält als Material ABS, der Trockentrichter 1b PE und der Trockentrichter 1c POM. Weiter wird angenommen, dass die Trockentrichter 1a bis 1c maximal gefüllt sind.

ABS hat einen maximalen Durchsatz D von 90 kg/h eine Schüttdichte S von 0,9 kg/l und eine angenommene Trockenzeit T von 3,5h.

Für das im Trockentrichter 1b befindliche PE sind folgende Zahlen gegeben: D=110 kg/h, S=0,6 kg/l und T=2,0h.

Die entsprechenden Zahlenwerte für das im Trockentrichter 1c befindliche POM sind: D=40 kg/h, S=0,7 kg/l und T=2,5h.

Aus diesen Zahlen lässt sich das Volumen der entsprechenden Trockentrichter 1a bis 1c nach der Formel

$$V = D \times T/S$$

berechnen. Für die oben beispielhaft angegebenen Werte ergibt sich somit für den Trockentrichter 1a ein benötigtes Volumen V von 350 l, für Trockentrichter 1b ein Volumen V von 367 l und für den Trockentrichter 1c ein Volumen V von 143 l.

Dementsprechend werden für die Trockentrichter 1a und 1b 400 l-Trichter und für den Trockentrichter 1c ein 150 l-Trichter eingesetzt.

Die benötigte Einzelluftmenge jedes Trockentrichters 1a bis 1c lässt sich nach der Formel

Q=spezifische Luftmenge ($m^3$/kg) x max. Durchsatz (kg/h) berechnen.

Für den Trockentrichter 1a wird eine spezifische Luftmenge von 1,3 $m^3$/kg, für den Trockentrichter 1b eine spezifische Luftmenge von 2,0 $m^3$/kg und für den Trockentrichter 1c eine spezifische Luftmenge von 1,2 $m^3$/kg ange-nommen. Unter Berücksichtigung des angegebenen Durchsatzes D von 90 kg/h, 110 kg/h und 40 kg/h ergeben sich für die einzelnen Trockentrichter 1a bis 1c folgende benötigte Einzelluftmengen:

$$Q_{1a} = 1,3 \ m^3/kg \ x \ 90 \ kg/h = 117 \ m^3/h$$

$$Q_{1b} = 2,0 \ m^3/kg \ x \ 110 \ kg/h = 220 \ m^3/h$$

$$Q_{1c} = 1,2 \ m^3/kg \ x \ 40 \ kg/h = 48 \ m^3/h$$

Die berechneten Einzelluftmengen Q bilden die Soll-Einzelluftmengen der jeweiligen Trockentrichter 1a bis 1c.

Aus den Soll-Einzelluftmengen Q ergibt sich durch Addition die Gesamtluftmenge $Q_{ges}$ als Soll-Gesamtluftmenge:

$$Q_{ges} = Q_{1a} + Q_{1b} + Q_{1c} = 117 \ m^3/h + 220 \ m^3/h + 48 \ m^3/h = 385 \ m^3/h$$

Der Trockenlufterzeuger 17 muss dementsprechend diese Soll-Gesamtluftmenge zur Verfügung stellen. Im Beispielsfall wird für den Trockenlufterzeuger 17 die Baugröße gewählt, die maximal 400 $m^3$/h liefert.

Zu Beginn des Trocknungsprozesses werden die Trockentrichter 1a bis 1c und der Trockenlufterzeuger 17 eingeschaltet. Alle Stellklappen 7 stehen auf einem vordefinierten Stellwinkel auf Basis der 100 %-Luftmengenregel, alternativ auch ganz offen. Der Trockenlufterzeuger 17 bringt zunächst die maximale Luftmenge als Gesamtluftmenge in die Anlage, im Beispiel $Q_{ges}$=400 $m^3$/h.

Zu bestimmten Zeitpunkten werden mit den Steuereinheiten 12 über die genannten spezifischen Luftmengen je Material und die Materialmengen im Trockentrichter 1a bis 1c, welche mittels beschriebener Möglichkeiten erfasst werden, die Soll-Einzelluftmengen berechnet. Die entsprechenden Werte werden in definierten Zeitintervallen der Steuereinheit 12 des Trockenlufterzeugers 17 zugeführt (Pfeil I).

Aus den zugeführten Daten (I) rechnet die Steuereinheit 12 des Trockenlufterzeugers 17 nach einer vorgegebenen Wartezeit die Soll-Gesamtluftmenge (II).

Der Trockenlufterzeuger 17 gleicht mittels der Strömungsmessblende 8 die Ist-Gesamtluftmenge mit der berechneten Soll-Gesamtluftmenge (II) ab.

Der Trockenlufterzeuger 17 regelt so lange, bis die Ist-Gesamtluftmenge und die Soll-Gesamtluftmenge unter Berücksichtigung zulässiger Toleranzen gleich sind.

Die Anpassung der Gesamtluftmenge beim Trockenlufterzeuger 17 erfolgt im Beispielfall durch eine Drehzahlregelung des Gebläses 18 mit Hilfe des Frequenzumrichter 23 und dem Abgleich der Strömungsmessung mit Hilfe der Strömungsmessblende 8.

Wenn die Ist-Gesamtluftmenge gleich der Soll-Gesamtluftmenge ist, sendet die Steuereinheit 12 des Trockenlufterzeugers 17 ein Signal (III) an die Steuereinheit 12 des Trockentrichters 1a, um dieser Steuereinheit mitzuteilen, dass die benötigte Soll-Gesamtluftmenge eingestellt ist.

Sobald die Steuereinheit 12 des Trockentrichters 1a das entsprechende Signal von der Steuereinheit 12 des Trockenlufterzeugers 17 erhalten hat, misst die Steuereinheit 12 des Trockentrichters 1a in Verbindung mit der Strömungsmessblende 8 die Ist-Einzelluftmenge des Trockentrichters 1a. Sofern die gemessene Ist-Einzelluftmenge der berechneten Soll-Einzelluftmenge entspricht, sendet die Steuereinheit 12 des Trockentrichters 1a ein entsprechendes Signal IV an die Steuereinheit 12 des nachfolgenden Trockentrichters 1b.

Solange die Ist-Einzelluftmenge nicht der Soll-Einzelluftmenge unter Berücksichtigung zulässiger Toleranzen entspricht, regelt die Steuereinheit 12 so lange, bis die beiden Werte übereinstimmen. Die Anpassung der Einzelluftmenge erfolgt mit Hilfe der Stellklappe 7 und dem Abgleich der Strömungsmessung mit Hilfe der Strömungsmessblende 8 und einer für die Strömungsmessblende hinterlegten Formel.

Sobald die Soll- und die Einzelluftmenge übereinstimmen, sendet die Steuereinheit 12 des Trockentrichters 1a das entsprechende Signal an die Steuereinheit 12 des nachfolgenden Trockentrichters. Nun erfolgt die Einstellung des Trockentrichters 1b in der gleichen Weise, wie anhand des Trockentrichters 1a beschrieben worden ist und sendet ein Signal V an den Trockentrichter 1c.

Auf diese Weise werden nacheinander alle Trockentrichter der Anlage entsprechend eingestellt.

Sobald der letzte Trockentrichter in der Anlage, im Beispielfall Trockentrichter 1c, in entsprechend gleicher Weise, wie anhand Trockentrichter 1a und 1b beschrieben, eingeregelt ist, sendet die Steuereinheiten 12 des Trockentrichters 1c ein entsprechendes Signal VI der Steuereinheit 12 des Trockenlufterzeugers 17. Dessen Steuereinheit 12 prüft nun wieder, ob die Ist-Gesamtluftmenge noch der Soll-Gesamtluftmenge entspricht. Eine Nachregulierung ist aufgrund der Druck- und Volumenstromveränderung wegen der jeweiligen Stellung der Stellklappe 7 wahrscheinlich. Die Steuereinheit 12 des Trockenlufterzeugers 17 regelt dann wieder so nach, bis der Ist-Gesamtluftwert dem Soll-Gesamtluftwert unter Berücksichtigung zulässiger Toleranzen entspricht.

Die Ist-Luftmengen des Trockenlufterzeugers 17 und der Trockentrichter 1a bis 1c werden iterativ an die Soll-Luftmengen angenähert, bis alle Werte unter Berücksichtigung eines zulässigen Toleranzbereiches jeweils gleich sind.

Ein besonderer Vorteil des Verfahrens besteht darin, dass mit verändertem Materialdurchsatz der Wärmeeintrag durch die Anpassung der Trockenluftmenge in Kombination mit Anpassung der Heizleistung geändert werden kann. Bei Änderung des Materialdurchsatzes wird in gleicher Weise die Anlage eingestellt, wie dies für den ersten Trocknungsvorgang beschrieben worden ist.

Bei Wechsel eines Materials in einem Trockentrichter erfolgt eine Luftmengenanpassung über die Auswahl des im Trockentrichter befindlichen Materials in einer Datenbank und eine laufende Neuberechnung der benötigten Einzelluftmenge.

Auf diese Weise wird eine automatische Luftdimensionierung erreicht, wobei die Trockenluft optimal auf die Trockentrichter bzw. auf den Bedarf der jeweiligen Materialien in den Trockentrichtern aufgeteilt wird. Der Wärmeeintrag lässt sich somit optimal auf das Material und den Trockentrichter abstimmen. Das im Trockentrichter befindliche zu trocknende Material bekommt genau diejenige Luftmenge, die für den Trocknungsvorgang benötigt wird. Das Verfahren arbeitet dadurch sehr energiesparend. Außerdem wird das Material optimal geschützt.

Die vom Trockenlufterzeuger 17 bereitgestellte Gesamtluftmenge ist auf die benötigten Einzelluftmengen der Trockentrichter optimal abgestimmt, so dass der Trockenlufterzeuger 17 nur so viel Luft liefert, wie die Trockentrichter benötigen. Dadurch ergibt sich eine hohe Energieeinsparung und ein guter Materialschutz.

Vorteilhaft ist die Anlage so gestaltet, dass die beschriebene Regelung selbsttätig erfolgt. Die Soll-Luftmengen werden vollautomatisch eingestellt, so dass eine manuelle Anpassung durch Abgleich mit Blick auf eine grobe Luftmengenanzeige entfällt.

**Patentansprüche**

**1.** Verfahren zum Trocknen von Kunststoffmaterial in Form von Granulat, Pulver und dgl., bei dem Trockenluft mit wenigstens einem Trockenlufterzeuger (17) erzeugt und durch das in einem Trockentrichter (1) befindliche Kunststoffmaterial geleitet wird, die Feuchtigkeit im Kunststoffmaterial aufnimmt und als Rückluft aus dem Trockentrichter (1) austritt,
**dadurch gekennzeichnet, dass** mittels einer Strömungsmessung eine Ist-Luftmenge der dem Trockentrichter (1) zugeführten Trockenluft erfasst und auf eine Soll-Luftmenge geregelt wird, und dass eine Ist-Gesamtluftmenge der aus dem Trockenlufterzeuger (17) austretenden Trockenluft auf eine Soll-Gesamtluftmenge geregelt wird.

**2.** Verfahren nach Anspruch 1,
**dadurch gekennzeichnet, dass** die Strömungsmessung mittels einer Strömungsmessblende (8) in Verbindung mit einer Differenzdruck-Luft-Kennlinie vorgenommen wird, wobei vorteilhaft an der Strömungsmessblende (8) ein Differenzdruck gemessen wird.

**3.** Verfahren nach Anspruch 1 oder 2,
**dadurch gekennzeichnet, dass** der Gegendruck des Trockentrichters (1) eingestellt wird.

**4.** Verfahren nach einem der Ansprüche 1 bis 3,
**dadurch gekennzeichnet, dass** zur Ermittlung der Ist-Luftmenge der Differenzdruck, die Temperatur der dem Trockentrichter (1) zugeführten Trockenluft, der statische Luftdruck, eine Gaskonstante für die Trockenluft und einer für die Geometrie der Strömungsmessblende (8) hinterlegten Formel herangezogen werden.

**5.** Verfahren nach einem der Ansprüche 1 bis 4,
**dadurch gekennzeichnet, dass** zur Ermittlung der Ist-Gesamtluftmenge der Differenzdruck an einer Strömungsmessblende (8), eine für die Geometrie der Strömungsmessblende (8) hinterlegten Formel, die Temperatur der den Trockenlufterzeuger (17) verlassenden Trockenluft, der statische Luftdruck und eine Gaskonstante für die Trockenluft herangezogen werden.

**6.** Verfahren nach Anspruch 4 oder 5,
**dadurch gekennzeichnet, dass** der statische Luftdruck in einer Rohrleitung (2, 2') des Trockentrichters (1) bzw. des Trockenlufterzeugers (17) oder in der Umgebung gemessen wird.

**7.** Verfahren nach einem der Ansprüche 1 bis 6,
**dadurch gekennzeichnet, dass** zur Veränderung der Ist-Gesamtluftmenge die Drehzahl eines Gebläses (18) eingestellt wird.

8. Verfahren nach einem der Ansprüche 1 bis 7,
**dadurch gekennzeichnet, dass** zur Veränderung der Ist-Gesamtluftmenge mittels wenigstens einer Bypassleitung (26) Luft aus der Rohrleitung (2') des Trockenlufterzeugers (17) abgeführt wird.

9. Verfahren nach einem der Ansprüche 1 bis 8, bei dem an den Trockenlufterzeuger (17) wenigstens zwei Trockentrichter (1) angeschlossen sind,
**dadurch gekennzeichnet, dass** zunächst die Ist-Gesamtluftmenge des Trockenerzeugers (17) eingestellt und anschließend die Ist-Luftmenge der Trockentrichter (1) nacheinander eingestellt werden.

10. Verfahren nach Anspruch 9,
**dadurch gekennzeichnet, dass** die Trockentrichter (1) ihre Ist-Luftmengenwerte an eine Steuereinheit (12) des Trockenlufterzeugers (17) senden, die aus den Ist-Luftmengen die Ist-Gesamtluftmenge errechnet, sie mit einer Soll-Gesamtluftmenge vergleicht und so lange regelt, bis die Ist-Gesamtluftmenge unter Berücksichtigung einer zulässigen Toleranz der Soll-Gesamtluftmenge entspricht.

11. Verfahren nach einem der Ansprüche 1 bis 8,
**dadurch gekennzeichnet, dass** zunächst die Ist-Gesamtluftmenge des Trockenlufterzeugers (17) eingestellt wird, und dass anschließend durch ein Freigabesignal alle eingeschalteten Trockentrichter (1) zur Einregelung der Ist-Luftmengen freigegeben werden.

12. Anlage zur Durchführung des Verfahrens nach einem der Ansprüche 1 bis 11, mit mindestens einem Trockenlufterzeuger (17), an den wenigstens zwei Trockentrichter (1) mittels einer Trockenluftleitung (2, 2') und einer Rückluftleitung (3, 3') angeschlossen ist, wobei in der Trockenluftleitung (2) eine Strömungsmessblende (8) sitzt,
**dadurch gekennzeichnet, dass** in der Trockenluftleitung (2) der Strömungsmessblende (8) eine Stellklappe (7) vorgeschaltet ist, die motorisch verstellbar ist.

13. Anlage nach Anspruch 12,
**dadurch gekennzeichnet, dass** der Strömungsblende (8) ein Differenzdruck-Messumformer (9) zugeordnet ist, der mit einer Steuereinheit (12) signalverbunden ist, an die vorteilhaft ein Motor (16) der Stellklappe (7) angeschlossen ist.

14. Anlage nach Anspruch 12 oder 13,
**dadurch gekennzeichnet, dass** an die Steuereinheit (12) ein Druckmessaufnehmer (15) und ein Temperatursensor (10) angeschlossen sind, die den Druck und die Temperatur der Trockenluft in der Trockenluftleitung (2) erfassen.

15. Anlage nach einem der Ansprüche 12 bis 14,
**dadurch gekennzeichnet, dass** der Trockenlufterzeuger (17) in seiner Trockenluftleitung (2') eine Strömungsmessblende (8) aufweist, die einem in seiner Drehzahl einstellbaren Gebläse (18) nachgeschaltet ist, wobei die Drehzahl des Gebläses (18) vorteilhaft durch einen Frequenzumrichter (23) einstellbar ist.

16. Anlage nach Anspruch 15,
**dadurch gekennzeichnet, dass** der Strömungsmessblende (8) des Trockenlufterzeugers (17) ein Differenzdruck-Messumformer (9) zugeordnet ist, der mit einer Steuereinheit (12) signalverbunden ist.

17. Anlage nach Anspruch 16,
**dadurch gekennzeichnet, dass** die Signaleinheit (12) des Trockenlufterzeugers (17) mit der (den) Signaleinheit(en) des (der) Trockentrichter (1) signalverbunden ist.

18. Anlage nach einem der Ansprüche 12 bis 17,
**dadurch gekennzeichnet, dass** die Trockenluftleitung (2') und die Rückluftleitung (3') des Trockenlufterzeugers (17) durch wenigstens eine Bypassleitung (26) verbunden sind, in der eine motorisch angetriebene Stellklappe (7) sitzt, deren Motor (16) an die Steuereinheit (12) angeschlossen ist.

Fig. 1

Fig. 2

Fig. 3

RL

VL

3'  2'  9  14
16
13
7
26  8  11
PDRC
TRC  12  UC  PRC
10  000.0  15
25  24
18  M  NS
17

Fig. 4

Fig. 5

Fig. 6

EP 4 614 094 A1

Fig. 7

Druckdifferenz in mbar

Volumenstrom in m³/h

80 Hz
70 Hz
60 Hz
50 Hz
40 Hz

Fig. 8

EP 4 614 094 A1

Fig. 9

Fig. 10

Fig. 11

Fig. 12

III  IV  V  VI

I

II

117+220
+48=
385m³/h

3'  2'  3  2  3  2  3  2

12  12  7  12  7  12  7

Δp1  Δp1  Δp1

8  8

18  8  8  8

1a  1b  1c

17

23  M

ABS:        PE:         POM:
D=90kg/h    D=110kg/h   D=40kg/h
S=0,9kg/l   S=0,6kg/l   S=0,7kg/l
T=3,5h      T=2,0h      T=2,5h

EP 4 614 094 A1

25

Europäisches
Patentamt

European
Patent Office

Office européen
des brevets

**EUROPÄISCHER RECHERCHENBERICHT**

**Nummer der Anmeldung**

EP 25 00 0023

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 186 613 B1 (PIOVAN SPA [IT]) 29. Mai 2013 (2013-05-29) | 1,3,7,8, 11,12 | INV. F26B3/16 |
| Y | * Abbildung 1 * * Absatz [0016] * | 2,4-6,9, 10 | F26B17/14 F26B21/12 |
| | - - - - - | | |
| X | DE 197 19 483 A1 (MOTAN HOLDING GMBH [DE]) 12. November 1998 (1998-11-12) | 12-18 | |
| Y | * Abbildungen * * Spalte 2, Zeile 26 - Zeile 39 * * Spalte 3, Zeile 15 - Zeile 22 * | 2,4-6,9, 10 | |
| | - - - - - | | |
| A | US 2009/031580 A1 (MORETTO RENATO [IT]) 5. Februar 2009 (2009-02-05) * das ganze Dokument * | 1-8 | |
| | - - - - - | | |
| A | US 2010/217445 A1 (MORETTO RENATO [IT]) 26. August 2010 (2010-08-26) * das ganze Dokument * | 1-18 | |
| | - - - - - | | |

**RECHERCHIERTE SACHGEBIETE (IPC)**

F26B

Der vorliegende Recherchenbericht wurde für alle Patentansprüche erstellt

| Recherchenort | Abschlußdatum der Recherche | Prüfer |
|---|---|---|
| Den Haag | 22. Juli 2025 | Fernandez Ambres, A |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**

EP 25 00 0023

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-07-2025

| Im Recherchenbericht angeführtes Patentdokument | Datum der Veröffentlichung | Mitglied(er) der Patentfamilie | Datum der Veröffentlichung |
|---|---|---|---|
| EP 2186613 B1 | 29-05-2013 | KEINE | |
| DE 19719483 A1 | 12-11-1998 | KEINE | |
| US 2009031580 A1 | 05-02-2009 | CN 101358804 A | 04-02-2009 |
| | | EP 2020581 A1 | 04-02-2009 |
| | | KR 20090014073 A | 06-02-2009 |
| | | US 2009031580 A1 | 05-02-2009 |
| US 2010217445 A1 | 26-08-2010 | AT E532017 T1 | 15-11-2011 |
| | | BR PI1000954 A2 | 21-06-2011 |
| | | CA 2693167 A1 | 25-08-2010 |
| | | CN 101881554 A | 10-11-2010 |
| | | EP 2224196 A1 | 01-09-2010 |
| | | IT 1392943 B1 | 02-04-2012 |
| | | JP 5905190 B2 | 20-04-2016 |
| | | JP 2010195046 A | 09-09-2010 |
| | | KR 20100097068 A | 02-09-2010 |
| | | US 2010217445 A1 | 26-08-2010 |

EPO FORM P0461

Für nähere Einzelheiten zu diesem Anhang : siehe Amtsblatt des Europäischen Patentamts, Nr.12/82